# EUROPÄISCHE PATENTSCHRIFT

(11) **EP 1 803 040 B1**
(45) Veröffentlichungstag und Bekanntmachung des Hinweises auf die Patenterteilung: **07.04.2010**
(21) Anmeldenummer: 05797039.4
(22) Anmeldetag: 10.10.2005
(51) Int. Cl.: G05B 19/042, G01P 13/04

(54) **VERFAHREN ZUR LASTZUSTANDSÜBERWACHUNG EINER ANTRIEBSMASCHINE UND ZUGEHÖRIGE VORRICHTUNG**
METHOD FOR MONITORING THE LOAD CONDITION OF A MOTOR DRIVE AND CORRESPONDING DEVICE
PROCEDE DE SURVEILLANCE DE L'ETAT DE CHARGE D'UN MOTEUR D'ENTRAINEMENT ET DISPOSITIF ASSOCIE

(30) Priorität: 19.10.2004 DE 102004050899
(43) Veröffentlichungstag der Anmeldung: 04.07.2007
(73) Patentinhaber: SIEMENS AKTIENGESELLSCHAFT, 80333 München (DE)
(72) Erfinder: MICHAELIS, Gerd, 91096 Möhrendorf (DE)
(86) Internationale Anmeldenummer: PCT/EP2005/055130
(87) Internationale Veröffentlichungsnummer: WO 2006/042806

(56) Entgegenhaltungen:
- WO-A-01/28401
- US-A1- 2004 084 014
- PATENT ABSTRACTS OF JAPAN Bd. 016, Nr. 177 (M-1241), 28. April 1992 (1992-04-28) -& JP 04 019118 A (NISSEI PLASTICS IND CO), 23. Januar 1992 (1992-01-23)

## Beschreibung

Die Erfindung betrifft ein Verfahren zur Lastzustandsüberwachung einer drehzahlveränderlichen Antriebsmaschine. Die Erfindung bezieht sich weiter auf eine nach diesem Verfahren arbeitende Vorrichtung.

Eine drehzahlveränderliche Antriebsmaschine arbeitet in der Regel gegen ein mechanisches Lastmoment an, das mit einer Geschwindigkeit, die insbesondere durch eine Funktion der Drehzahl der Antriebsmaschine gegeben ist, variiert. Gegenwärtig weist eine derartige Antriebsmaschine zumeist einen Komparator auf, der eine Warnung auslöst, wenn das Lastmoment der Antriebsmaschine über einen Warngrenzwert hinausgeht, wie z.B. im Dokument JP 04019118 beschrieben. Steigt das Lastmoment der Antriebsmaschine beispielsweise quadratisch mit der Drehzahl an, so treten bei hoher Drehzahl vergleichsweise hohe Lastmomente auf, nach denen der Warngrenzwert auszurichten ist. Infolgedessen wird aber bei vergleichsweise geringer Drehzahl der Antriebsmaschine auch eine erhebliche Abweichung des Lastmomentes häufig nicht detektiert, weil das Lastmoment den für hohe Drehzahlen ausgelegten Warngrenzwert nicht überschreitet.

Der Erfindung liegt die Aufgabe zugrunde, ein besonders effektives Verfahren zur Lastzustandsüberwachung einer drehzahlveränderlichen Antriebsmaschine und eine zur Durchführung des Verfahrens geeignete Vorrichtung anzugeben.

Bezüglich des Verfahrens wird die genannte Aufgabe erfindungsgemäß gelöst durch die Merkmale des Anspruchs 1. Das Verfahren umfasst dabei eine Ermittlung einer momentanen Geschwindigkeit und eines momentanen Lastmoments im Betrieb einer Antriebsmaschine. Das momentane Lastmoment wird mit einem Überwachungsbereich verglichen, der in Abhängigkeit der Geschwindigkeit vorgegeben ist. Liegt das momentane Lastmoment für die Dauer eines vorgegebenen Reaktionsverzögerungswerts außerhalb des für die momentane Geschwindigkeit vorgegebenen Überwachungsbereichs, so wird ein Warnsignal abgegeben.

Als "momentanes Lastmoment" wird hierbei ein fortlaufend oder regelmäßig erhobener Messwert des Lastmoments bezeichnet. Der Begriff "momentane Geschwindigkeit" bezeichnet einen zu jeweils entsprechenden Zeitpunkten erhobenen Messwert der Geschwindigkeit, die insbesondere der Drehzahl der Antriebsmaschine entspricht. Der geschwindigkeitsabhängig vorgegebene Überwachungsbereich ist gegeben durch einen insbesondere mit der Geschwindigkeit variierenden unteren Grenzwert, bei dessen Unterschreitung das Warnsignal ausgelöst wird, und einen insbesondere mit der Geschwindigkeit variierenden oberen Grenzwert, bei dessen Überschreitung das Warnsignal ausgelöst wird. In einer durch die Geschwindigkeit als Abszisse und das Lastmoment als Ordinate aufgespannten Ebene wird durch den Verlauf des geschwindigkeitsabhängigen Überwachungsbereichs mit variierender Geschwindgkeit eine insbesondere geschlossene Fläche ausgebildet, die nachfolgend als Überwachungszone bezeichnet ist. In dieser zweidimensionalen Betrachtung wird das Warnsignal äquivalenterweise ausgelöst, wenn der durch die momentane Geschwindigkeit und das momentane Lastmoment definierte momentane Lastzustand für die Dauer der Reaktionsverzögerungszeit die Überwachungszone verlässt.

Vorteilhafte Weiterbildungen des Verfahrens sind Gegenstand der auf den Anspruch 1 rückbezogenen Unteransprüche.

Bezüglich der nach dem Verfahren arbeitenden Vorrichtung wird die genannte Aufgabe erfindungsgemäß gelöst durch die Merkmale des Anspruchs 6. So umfasst die erfindungsgemäße Vorrichtung eine Messeinrichtung zur Ermittlung der momentanen Geschwindigkeit und des momentanen Lastmoments einer Antriebsmaschine. Als Maß für die Geschwindigkeit der Antriebsmaschine wird insbesondere eine Drehzahl ermittelt, mit der die Antriebsmaschine eine Anzahl von Umdrehungen pro Zeiteinheit ausführt. Weiter umfasst die Vorrichtung eine Überwachungseinrichtung, die dazu ausgebildet ist, ein Warnsignal abzugeben, wenn das ermittelte momentane Lastmoment für eine vorgegebene Reaktionsverzögerungszeit außerhalb eines in Abhängigkeit der Geschwindigkeit vorgegebenen Überwachungsbereichs liegt.

Gemäß einer vorteilhaften Ausgestaltung sind zusätzlich zu einem ersten Überwachungsbereich ein oder mehrere weitere Überwachungsbereiche vorgesehen, denen jeweils eine bestimmte weitere Reaktionsverzögerungszeit zugeordnet ist.

Um differenziert auf verschieden starke Abweichungen des momentanen Lastmoments von dem jeweiligen Erwartungswert reagieren zu können, ist zweckmäßigerweise vorgesehen, zumindest den ersten Überwachungsbereich in dem oder jedem weiteren Überwachungsbereich vollständig aufzunehmen. Nach einer besonders bevorzugten Variante ist dem inneren von zwei Überwachungsbereichen eine im Vergleich zum äußeren Überwachungsbereich längere Reaktionsverzögerungszeit zugeordnet. Dies dient dazu, eine vergleichsweise geringe Abweichung, die lediglich zu einem Verlassen des inneren Überwachungsbereichs durch das momentane Lastmoment führt, für eine längere Zeitspanne zuzulassen als eine vergleichsweise starke Abweichung, bei der das Lastmoment auch den äußeren Überwachungsbereich verlässt.

In Hinblick auf eine effektive und insbesondere einfach automatisierbare Bestimmung des oder jeden Überwachungsbereichs bzw. der oder jeder Überwachungszone ist vorzugsweise vorgesehen, in einem Konfigurationsbetrieb der Antriebsmaschine ein geschwindigkeitsabhängiges Lasthistogramm zu ermitteln, anhand dessen dann die Überwachungszone bzw. der Überwachungsbereich abgeleitet wird. Als Lasthistogramm wird eine Häufigkeitsverteilung bezeichnet, die angibt, mit welcher Häufigkeit ein bestimmtes Lastmoment bei einer bestimmten Geschwindigkeit der Antriebsmaschine im ordnungsgemäßen Betrieb durchschnittlich auftritt. Das Lasthistogramm wird zweckmäßigerweise durch klassenweise Aufsummierung der während des Konfigurationsbetriebs auftretenden Lastzustände ermittelt. Vorzugsweise wird die Ermittlung des Lasthistogramms und die anschließende Ableitung der oder jeder Überwachungszone, und damit des oder jeden für eine gegebene Geschwindigkeit vorliegenden Überwachungsbereichs, durch eine hierfür ausgebildete Konfigurationseinheit durchgeführt.

Als einfache und zweckmäßige Konstruktionsvorschrift zur Ableitung der oder jeder Überwachungszone bzw. des oder jedem Überwachungsbereichs ist vorgesehen, dass um jeden Punkt des Lasthistogramms in der durch das Lastmoment und die Geschwindigkeit aufgespannten Ebene ein Kreis gebildet wird. Der jeweilige Radius dieser Kreise variiert hierbei als Funktion der Histogrammhöhe (oder Klassenhäufigkeit). Zusätzlich oder alternativ ist der Radius bevorzugt als Funktion des Lastmoments und/oder der Geschwindigkeit vorgegeben. Die Überwachungszone ist dabei als die von den Kreisen eingeschlossene Fläche, d.h. durch deren Vereinigungsmenge, gegeben. Die oder jede Überwachungszone kann dabei bedarfsweise durch eine geschlossene Fläche oder mehrere nebeneinanderliegende Teilflächen ausgebildet sein.

Alternativ dazu wird die Fläche der oder jeder Überwachungszone auch durch eine kreisförmige Fläche mit vorgegebenem Radius um den Häufigkeitsmittelwert des Lasthistogramms bestimmt. Anstelle von Kreisen können bei Bedarf auch andere Umrissformen verwendet werden. Der oder jeder bei gegebener Geschwindigkeit vorliegende Überwachungsbereich ergibt sich definitionsgemäß aus einem dieser Geschwindigkeit entsprechenden Schnitt durch die zugehörige Überwachungszone. Die oder jede Überwachungszone kann ferner auch unter Verwendung sonstiger Algorithmen, insbesondere auch manuell, abgeleitet werden.

Die mit der Erfindung erzielten Vorteile bestehen insbesondere darin, dass ein momentan an einer Antriebsmaschine anliegendes Lastmoment anhand eines Überwachungsbereichs überwacht wird, der die maschinenspezifische Geschwindigkeitsabhängigkeit des Lastmoments berücksichtigt. Somit werden Abweichungen sowohl bei hoher als auch bei geringer Drehzahl der Antriebsmaschine nach stets angemessenen Kriterien detektiert und somit unabhängig von der momentanen Geschwindigkeit effektiv erkannt.

Nachfolgend wird ein Ausführungsbeispiel der Erfindung anhand einer Zeichnung näher erläutert. Darin zeigen:
- FIG 1: ein Prinzipschaltbild einer Antriebsmaschine mit einer Vorrichtung zur Lastzustandsüberwachung,
- FIG 2: ein Lasthistogramm mit einem Überwachungsbereich zur Lastzustandsüberwachung der Antriebsmaschine gemäß FIG 1,
- FIG 3: in Darstellung gemäß FIG 2 das Lasthistogramm mit zwei alternativ ausgebildeten Überwachungsbereichen.

Einander entsprechende Teile und Größen sind in allen Figuren mit den gleichen Bezugszeichen versehen.

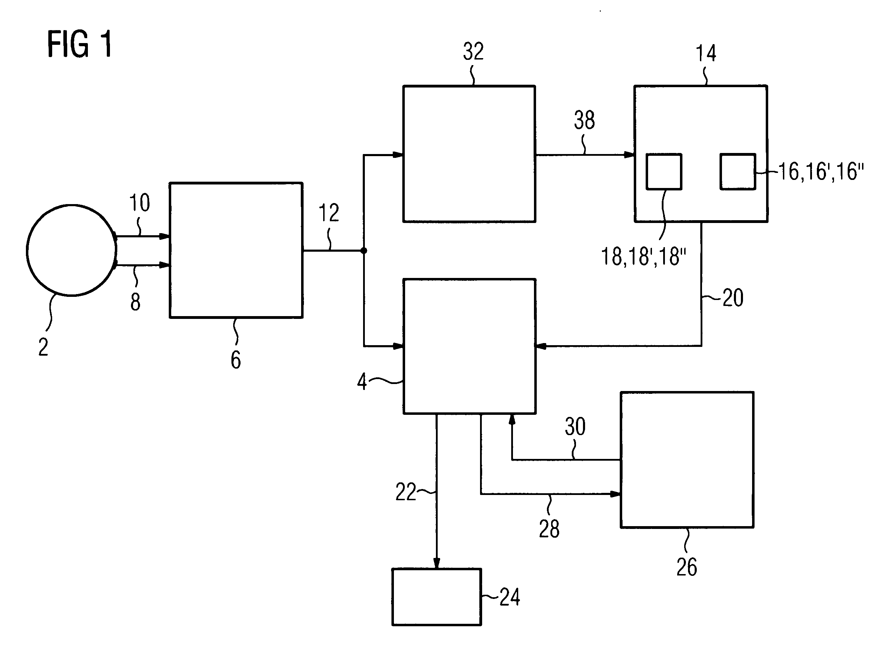

FIG 1 zeigt eine Antriebsmaschine 2, die im Betrieb mit einer insbesondere durch eine Drehzahl vorgegebene Geschwindigkeit v gegen ein mechanisches Lastmoment M arbeitet. Der Antriebsmaschine 2 ist eine nach dem erfindungsgemäßen Verfahren arbeitende Vorrichtung zur Lastzustandsüberwachung zugeordnet.

Die Vorrichtung umfasst eine Überwachungseinrichtung 4 und eine Messeinrichtung 6. Im Betrieb der Antriebsmaschine 2 ermittelt die Messeinrichtung 6 fortlaufend oder regelmäßig einen Messwert des Lastmoments M (nachfolgend als momentanes Lastmoment 8 bezeichnet), sowie einen Messwert der Geschwindigkeit v (nachfolgend als momentane Geschwindigkeit 10 bezeichnet). Die Messeinrichtung 6 stellt der Überwachungseinrichtung 4 ein Messdatensignal 12 zur Verfügung, das Informationen über das momentane Lastmoment 8 und die momentane Drehzahl 10 der Antriebsmaschine 2 beinhaltet. Die Überwachungseinrichtung 4 überwacht, ob das momentane Lastmoment 8 innerhalb eines in Hinblick auf die momentane Geschwindigkeit 10 gültigen Überwachungsbereichs 16 liegt. Der Überwachungsbereich 16 ist in einem Speicher 14 in Abhängigkeit der Geschwindigkeit v hinterlegt.

Verlässt das momentane Lastmoment 8 den für die momentane Geschwindigkeit 10 vorgegebenen Überwachungsbereich 16, so gibt die Überwachungseinrichtung 4 nach Ablauf einer im Speicher 14 hinterlegten, vorgegebenen Reaktionsverzögerungszeit 18, die der Überwachungseinrichtung 4 über ein Datensignal 20 zugeführt wird, ein Warnsignal 22 ab. Das Warnsignal 22 wird einer Weiterverarbeitungseinrichtung 24 zugeführt, die dazu ausgebildet ist, die Antriebsmaschine 2 nachzuregeln, abzuschalten und/oder das Warnsignal 22 in ein optisch und/oder akustisch für einen Beobachter wahrnehmbares Signal umzuwandeln.

Verlässt also das momentane Lastmoment 8 den Überwachungsbereich 16, so übermittelt die Überwachungseinrichtung 4 einer Zeitmesseinrichtung 26 ein Startsignal 28 zum Starten einer Zeitmessung für die vorgegebene Reaktionsverzögerungszeit 18. Nach Ablauf der Reaktionsverzögerungszeit 18 führt die Zeitmesseinrichtung 26 der Überwachungseinrichtung 4 ein Endsignal 30 zu. Liegt zum Zeitpunkt des Eingangs des Endsignals 30 an der Überwachungseinrichtung 4 das geschwindigkeitsabhängige Lastmoment 8 weiterhin außerhalb des Überwachungsbereichs 16, gibt die Überwachungseinrichtung 4, das Warnsignal 22 ab. Kehrt das Lastmoment 8 vor Erzeugung des Endsignals 30 in den Überwachungsbereich zurück, so wird die vorstehend beschriebene Zeitmesseinrichtung 26 zurückgesetzt. Um insbesondere bei starker Fluktuation des Lastmoments das Verfahren zu stabilisieren, wird die momentane Geschwindigkeit 10 und/oder das momentane Lastmoment 8 bevorzugt vor dem Vergleich mit dem Überwachungsbereich 16 zeitlich geglättet.

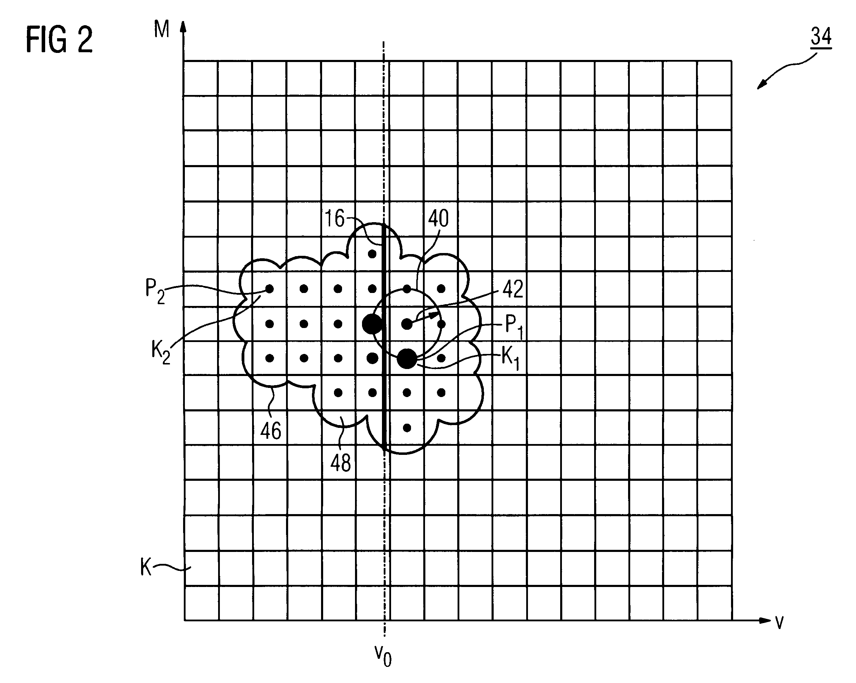

Des Weiteren umfasst die Vorrichtung eine Konfigurationseinrichtung 32. In einem Konfigurationsbetrieb der Antriebsmaschine 2 wird der Konfigurationseinrichtung 32 von der Messeinrichtung 6 das Messdatensignal 12 zugeführt, das Informationen zu dem momentanen Lastmoment 8 und der momentanen Geschwindigkeit 10 der Antriebsmaschine 2 übermittelt. Die Konfigurationseinrichtung 32 ist dazu ausgebildet, den Überwachungsbereich 16 festzulegen. Dazu sammelt die Konfigurationseinrichtung 32 über eine geeignete Zeitspanne T Messdaten von der Messeinrichtung 6 und erzeugt daraus ein geschwindigkeitsabhängiges Lasthistogramm 34 (FIG 2).

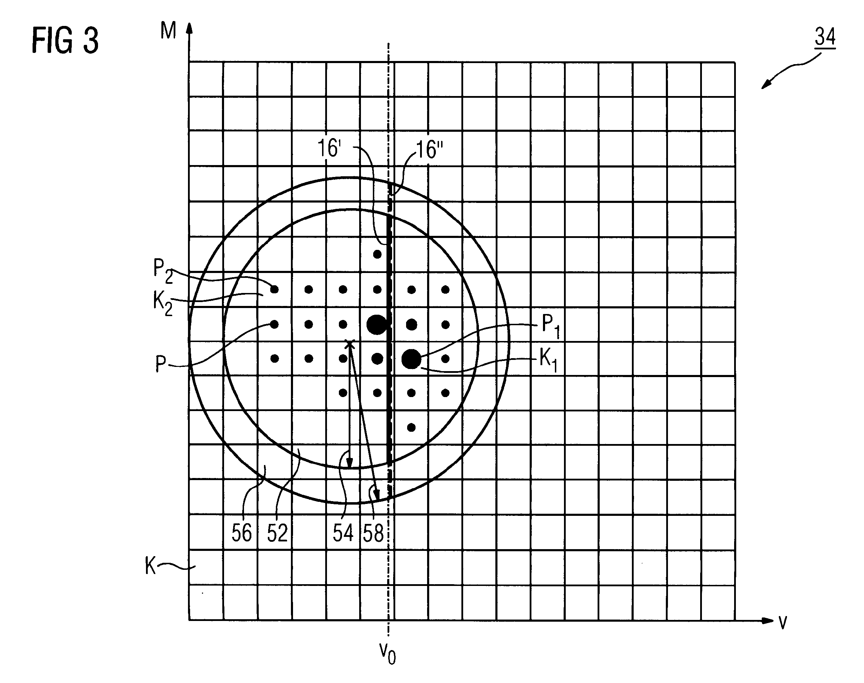

FIG 2 und 3 zeigen jeweils eine exemplarische Skizze eines solchen Lasthistogramms 34 in Projektion auf eine mathematische Ebene, die von der Geschwindigkeit v als Ordinate und dem Lastmoment M als Abszisse aufgespannt ist. Das Lasthistogramm 34 ist in eine Anzahl von Klassen K unterteilt, deren jede einem bestimmten Geschwindigkeitsbereich und einem bestimmten Lastmomentbereich zugeordnet ist.

Die während des Konfigurationsbetriebs detektierten Lastzustände werden einzelnen Klassen K des Lasthistogramms 34 zugeordnet und klassenweise aufsummiert. Jeder in FIG 2 und 3 eingezeichnete Punkt P stellt die Lasthistogrammhöhe der ihm zugeordneten Klasse K, also die Häufigkeit der der Klasse K zugeordneten, über die Zeitspanne T von der Antriebsmaschine 2 angenommenen Lastzustände dar. Je häufiger die einer Klasse K zugeordneten Lastzustände während der Zeitspanne T aufgetreten sind, desto größer ist der Durchmesser des entsprechenden Punktes P in der Klasse K eingezeichneten. Beispielsweise weist die Antriebsmaschine 2 über die Zeitspanne T einen durch den Punkt P₁ in der Klasse K₁ gekennzeichneten Lastzustand P₂ vergleichsweise häufiger auf als einen durch den Punkt in der Klasse K₂ gekennzeichneten Betriebszustand. Klassen K, deren Histogrammhöhe einen Mindestwert unterschreitet, sind in den FIG 2 und 3 als leere Quadrate repräsentiert. Das Lasthistogramm 34 bildet somit eine diskrete Häufigkeitsverteilung von über die Zeitspanne T im Konfigurationsbetrieb aufgetretenen Lastzuständen.

Um für die Überwachung der Antriebsmaschine 2 im Normalbetrieb einen Überwachungsbereich 16 festzulegen, wird in einer in FIG 2 verdeutlichten Ausführung des Verfahrens zunächst jeder Klasse K des Lasthistogramms 34 ein Kreis 40 zugewiesen, dessen Kreisradius 42 ist in Abhängigkeit der Histogrammhöhe festgelegt ist. Der Kreisradius 42 ist hierbei insbesondere für Klassen K, deren Histogrammhöhe den Mindestwert unterschreitet, auf Null gesetzt, so dass nur die in FIG 2 mit Punkten P repräsentierten Klassen K tatsächlich berücksichtigt werden. Die von den Kreisen 40 durch eine gemeinsame Umrisslinie 46 umschlossene Fläche wird als Überwachungszone 48 herangezogen, die für einen gegebenen Wert vₒ der Geschwindigkeit v den zugehörigen Überwachungsbereich 16 definiert.

FIG 3 zeigt eine alternative Ausführung des Verfahrens, nach der eine Überwachungszone 52 ermittelt wird, indem zunächst ein Häufigkeitsmittelwert 50 aller Klassenhäufigkeiten des Lasthistogramms 34 festgelegt wird. (in FIG 3 durch ein Kreuz gekennzeichnet). Die Überwachungszone 52 ist hierbei als Kreis um diesen Häufigkeitsmittelwert 50 mit einem Kreisradius 54 ausgebildet. Der Kreisradius 54 ist insbesondere an die Breite des Lasthistogramms 34 angepasst. Der aus der Überwachungszone 52 für gegebenen Wert vₒ der momentanen Geschwindigkeit v abzuleitende Überwachungsbereich 16" ergibt sich analog zu FIG 2 durch einen dem Wert vₒ entsprechenden Schnitt durch die Überwachungszone 52.

In einer verfeinerten Ausführungsform der Erfindung ist zusätzlich zu der ersten Überwachungszone 52 eine zweite Überwachungszone 56 festgelegt, die die Überwachungszone 52 vollständig einschließt und somit insbesondere einen vergleichsweise größeren Radius 58 aufweist. Aus der Überwachungszone 58 ist ein Überwachungsbereich 16" ableitbar, der beispielsweise für den Wert vₒ der Geschwindigkeit in FIG 3 eingetragen ist, und der den Überwachungsbereich 16' stets vollständig einschließt.

Der ersten Überwachungszone 52 bzw. dem ersten Überwachungsbereich 16' ist hierbei eine erste Reaktionsverzögerungszeit 18' (FIG 1) zugeordnet, die eine der zweiten Überwachungszone 56 bzw. dem zweiten Überwachungsbereich 16" zugeordnete zweite Reaktionsverzögerungszeit 18" (FIG 1) übersteigt.

## Patentansprüche

1. Verfahren zur Lastzustandsüberwachung einer drehzahlveränderlichen Antriebsmaschine (2), bei welchem im Betrieb eine momentane Geschwindigkeit (10) und ein momentanes Lastmoment (8) ermittelt wird, und bei welchem ein Warnsignal (22) abgegeben wird, wenn das momentane Lastmoment (8) für die Dauer einer vorgegebenen Reaktionsverzögerungszeit (18, 18', 18") außerhalb eines in Abhängigkeit der momentanen Geschwindigkeit (10) vorgegebenen Überwachungsbereichs (16, 16', 16") liegt,
**gekennzeichnet durch** einen ersten Überwachungsbereich (16'), dem eine erste Reaktionsverzögerungszeit (18') zugeordnet ist, und mindestens einen weiteren Überwachungsbereich (16"), dem eine weitere Reaktionsverzögerungszeit (18") zugeordnet ist.

2. Verfahren nach Anspruch 1,
**dadurch gekennzeichnet, dass** der erste Überwachungsbereich (16') vollständig in dem oder jedem weiteren Überwachungsbereich (16") aufgenommen ist, und dass die erste Reaktionsverzögerungszeit (18') die oder jede weitere Reaktionsverzögerungszeit (18") übersteigt.

3. Verfahren nach Anspruch 2,
**dadurch gekennzeichnet, dass** der oder jeder Überwachungsbereich (16, 16', 16") anhand eines geschwindigkeitsabhängigen Lasthistogramms (34) bestimmt wird.

4. Verfahren nach Anspruch 3,
**dadurch gekennzeichnet, dass** der oder jeder Überwachungsbereich (16, 16', 16") als diejenige Fläche definiert wird, die von um jede Klasse (K) des Lasthistogramms (34) gebildeten Kreisen (40) eingeschlossen ist, wobei der Kreisradius (42) eines jeden Kreises (40) als Funktion der Histogrammhöhe und/oder der Geschwindigkeit (v) und/oder des Lastmoments (M) bestimmt ist.

5. Verfahren nach Anspruch 3,
**dadurch gekennzeichnet, dass** der oder jeder Überwachungsbereich (16',16") durch einen Kreis (52,56) mit vorgegebenem Kreisradius (54,58) um einen Häufigkeitsmittelwert (50) des Lasthistogramms (34) bestimmt ist.

6. Vorrichtung zur Lastzustandsüberwachung einer drehzahlveränderlichen Antriebsmaschine (2) mit
- einer Messeinrichtung (6) zur Ermittlung einer momentanen Geschwindigkeit (10) und eines momentanen Lastmomentes (8), und
- einer Überwachungseinrichtung (4), die dazu ausgebildet ist, ein Warnsignal (22) abzugeben, wenn das Lastmoment (8) für die Dauer einer von einer Zeitmesseinrichtung (26) zur Verfügung gestellten Reaktionsverzögerungszeit (18,18',18") außerhalb eines in Abhängigkeit der Geschwindigkeit (10) vorgegebenen Überwachungsbereichs (16,16',16") liegt,
**gekennzeichnet durch** eine Konfigurationseinrichtung (32), die dazu ausgebildet ist, den Überwachungsbereich (16,16',16") anhand eines in einem Konfigurationsbetrieb der Antriebsmaschine (2) erzeugten, geschwindigkeitsabhängigen Lasthistogramms (34) zu bestimmen.

## Claims

1. Method for monitoring the load condition of a variable speed engine (2), in which an actual speed (10) and an actual load moment (8) are determined during operation, and in which a warning signal (22) is emitted when the actual load moment (8) lies outside a monitoring range (16, 16', 16"), predetermined as a function of the actual speed (10), for the duration of a predetermined delayed reaction time (18, 18', 18")
**characterised by** a first monitoring range (16'), to which a first delayed reaction time (18') is allocated and at least one additional monitoring range (16") to which an additional delayed reaction time (18") is allocated.

2. Method according to claim 1,
**characterised in that**, the first monitoring range (16') is included entirely in the one monitoring range or in each additional monitoring range (16") and that the first delayed reaction time (18') exceeds the one delayed reaction time or each additional delayed reaction time (18").

3. Method according to claim 2,
**characterised in that**, the one monitoring range or each monitoring range (16, 16', 16") is determined by means of a load histogram (34) as a function of the speed.

4. Method according to claim 3,
**characterised in that**, the one monitoring range or each monitoring range (16, 16', 16") is defined as that area, which is enclosed by the circles (40) drawn around each class (K) of the load histogram (34), it being possible that the circle radius (42) of each circle (40) is determined as a function of the histogram height and/or the speed (v) and/or the load moment (M).

5. Method according to claim 3,
**characterised in that**, the one monitoring range or each monitoring range (16', 16") is determined by a circle (52, 56) with a predetermined circle radius (54, 58) around an average value of the frequency (50) of the load histogram (34).

6. Device for monitoring the load condition of a variable speed engine (2) with
- a measuring device (6) for determining an actual speed (10) and an actual load moment (8), and
- a monitoring device (4), which is embodied to emit a warning signal (22) when the load moment (8) remains outside a monitoring range (16, 16', 16"), predetermined as a function of the speed (10), for the duration of a delayed reaction time (18, 18', 18"), which has been made available by a time measuring device (26),
**characterised by** a configuration device (32), which is embodied to determine the monitoring range (16, 16', 16") by means of a speed-dependent load histogram (34) generated during a configuration operation of the engine (2).

## Revendications

1. Procédé de contrôle de l'état de charge d'un moteur d'entraînement à vitesse de rotation variable, dans lequel on détermine en fonctionnement une vitesse ( 10 ) instantanée et un couple ( 8 ) de charge instantanée et dans lequel on émet un signal ( 22 ) d'avertissement, lorsque le couple ( 8 ) de charge instantanée se trouve, pendant la durée d'un temps ( 18, 18', 18" ) de retard de réaction prescrit, en-dehors d'une plage ( 16, 16', 16" ) de contrôle prescrite en fonction de la vitesse ( 10 ) instantanée,
**caractérisé par** une première plage ( 16' ) de contrôle, à laquelle est affecté un premier temps ( 18' ) de retard de réaction et par au moins une autre plage ( 16" ) de contrôle, à laquelle est affecté un autre temps ( 18" ) de retard de réaction.

2. Procédé suivant la revendication 1,
**caractérisé en ce que** la première plage ( 16' ) de contrôle est comprise entièrement dans la plage ( 16" ) de contrôle ou dans chaque autre plage ( 16" ) de contrôle et **en ce que** le premier temps ( 18' ) de retard de réaction dépasse le temps ( 18" ) de retard de réaction ou chaque autre temps ( 18" ) de retard de réaction.

3. Procédé suivant la revendication 2,
**caractérisé en ce que** l'on détermine la plage ( 16, 16', 16" ) de réaction ou chaque plage ( 16, 16', 16" ) de réaction au moyen d'un histogramme ( 34 ) de charge en fonction de la vitesse.

4. Procédé suivant la revendication 3,
**caractérisé en ce qu'**on définit la plage ( 16, 16', 16" ) de contrôle ou chaque plage ( 16, 16', 16" ) de contrôle comme la surface, qui est inscrite par des cercles ( 40 ) formés autour de chaque classe ( K ) de l'histogramme ( 34 ) de charge, le rayon ( 42 ) de chaque cercle ( 40 ) étant déterminé en fonction de la hauteur de l'histogramme et/ou de la vitesse ( v ) et/ou du couple ( M ) de charge.

5. Procédé suivant la revendication 3,
**caractérisé en ce qu'**on détermine la plage ( 16', 16" ) de contrôle ou chaque plage ( 16', 16" ) de contrôle par un cercle ( 52, 56 ) ayant un rayon ( 54, 58 ) prescrit autour d'une valeur ( 50 ) moyenne de fréquence de l'histogramme ( 34 ) de charge.

6. Dispositif de contrôle de l'état de charge d'un moteur ( 2 ) d'entraînement à vitesse variable comprenant
- un dispositif ( 6 ) de mesure, pour la détermination d'une vitesse ( 10 ) instantanée et d'un couple ( 8 ) de charge instantanée, et
- un dispositif ( 4 ) de contrôle, qui est constitué pour émettre un signal ( 22 ) d'avertissement, lorsque le couple ( 8 ) de charge instantanée se trouve, pendant la durée d'un temps ( 18, 18', 18" ) de retard de réaction prescrit, en-dehors d'une plage ( 16, 16', 16" ) de contrôle prescrite en fonction de la vitesse ( 10 ) instantanée,
**caractérisé par** un dispositif ( 32 ) de configuration, qui est constitué de manière à déterminer la plage ( 16, 16', 16" ) de contrôle au moyen d'un histogramme ( 34 ) de charge en fonction de la vitesse, qui est produit dans un fonctionnement de configuration du moteur ( 2 ) d'entraînement.
